# EUROPÄISCHE PATENTANMELDUNG

(11) **EP 1 262 605 A2**
(43) Veröffentlichungstag der Anmeldung: **04.12.2002**
(21) Anmeldenummer: 02007893.7
(22) Anmeldetag: 09.04.2002
(51) Int. Cl.: E04B 1/80

(54) **Formkörper**

(30) Priorität: 29.05.2001 DE 10125964
(71) Anmelder: Österreichische Heraklith GmbH, 9586 Fürnitz (AT)
(72) Erfinder: Eusch, Ingram, Dipl.-Ing., 9500 Villach (AT); Grasser, Karl-Heinz, 9712 Fresach (AT); Moser, Günter, 9500 Villach (AT); Griesser, Horst, 9712 Fresach (AT)
(74) Vertreter: Becker, Thomas, Dr., Dipl.-Ing.

(57) **Zusammenfassung**

Die Erfindung betrifft einen Formkörper mit mindestens einer verformbaren, porösen Schicht und einer gasdiffusionsdichten Umhüllung, wobei ein in dieser Schicht vorhandenes Porenvolumen zumindest teilweise evakuiert ist.

## Beschreibung

Die Erfindung betrifft einen Formkörper mit mindestens einer verformbaren, porösen Schicht. Derartige Formkörper sind zum Beispiel im Bauwesen, im Maschinenbau oder in der Automobilbranche in vielfältigen Ausführungsformen bekannt, beispielsweise als Holzwolle-Leichtbauelemente, Mineralfaserelemente, Dämmplatten oder dergleichen. Hierzu gehören aber auch Produkte aus insbesondere offenporigen Elastomeren, textile Gewebe und Gewirke, geschäumte Kunststoffe etc.

Der Stand der Technik und die Erfindung werden nachstehend anhand von Mineralfaser-Formkörpern näher beschrieben, wobei die Erfindung insoweit jedoch nicht beschränkt ist.

Formteile aus Mineralfasern sind beispielsweise als Wärmedämmplatten insbesondere zur thermischen Isolierung Stand der Technik. Sie bestehen üblicherweise aus irregulär verteilten Fasern, die beispielsweise über ein Bindemittel und/oder durch mechanische Maßnahmen (zum Beispiel Vernadelung) untereinander verbunden sind. Die Mineralfasern können in einer oder mehreren Schichten konfektioniert sein. Dabei kann die Orientierung der Fasern von Schicht zu Schicht oder innerhalb einer Schicht variieren. Beispielsweise sind sogenannte Lamellenelemente bekannt, bei denen einzelne Mineralfaserlamellen untereinander zu einem Mineralfaser-Formkörper konfektioniert sind. Die Orientierung der Fasern kann dabei prinzipiell beliebig sein. Zur Erhöhung der Druckfestigkeit sind Mineralfaserprodukte bekannt, bei denen die Fasern im wesentlichen senkrecht zu den beiden Hauptflächen des Produktes verlaufen.

Darüber hinaus sind nahezu beliebige alternative Formgebungen bekannt, beispielsweise Halbschalen zur Rohrisolierung, keilförmige Elemente, bahnenförmiges Material oder auch plattenförmige Produkte, deren eine Hauptfläche (Sichtfläche) profiliert ausgebildet ist (DE 197 36 870 A1).

Erfindungsgemäß unterliegt der Begriff "Formkörper" keinen Beschränkungen. Der Begriff Formkörper dient erfindungsgemäß lediglich der Abgrenzung gegenüber losen, unkonfektionierten Fasern.

Die Dichte der bekannten Mineralwolle-Formkörper variiert je nach Anwendungszweck erheblich. Der Rohdichtebereich liegt beispielsweise zwischen 10 und 1.000 kg/m³, üblicherweise zwischen 20 und 250 kg/m³.

Für eine ausreichende thermische Isolierung ist es notwendig, einen Formkörper geeigneter Rohdichte auszuwählen. Im Weiteren ist aber auch die Dicke des Formkörpers in Bezug auf die Dämmeigenschaften relevant. Sie kann zum Beispiel bei thermischen Isolierungen deutlich über 10 cm liegen.

Aus Vorstehendem leitet sich die Aufgabe ab, einen Formkörper mit mindestens einer verformbaren, porösen Schicht anzubieten, der bei geringerer Materialstärke mindestens gleiche thermische Isoliereigenschaften aufweist wie ein konventioneller Formkörper größerer Dicke oder der bei gleicher Materialstärke im Vergleich zum Stand der Technik verbesserte thermische Isoliereigenschaften besitzt.

Zur Lösung dieser Aufgabe geht die Erfindung von der Erkenntnis aus, daß Gase, speziell Luft, höhere Wärmeleitfähigkeiten besitzen (und damit schlechtere Wärmedämmeigenschaften) als Vakuum. Allen vorgenannten bekannten Formkörpern ist gemein, daß sie ein erhebliches Porenvolumen zwischen den Fasern aufweisen, welches zum Beispiel bei Dämmelementen aus Fasern, beispielsweise Mineralfasern, üblicherweise mindestens 90 Vol.-% beträgt.

Daraus leitet sich die weitere Erkenntnis ab, einen solchen Formkörper zumindest teilweise zu evakuieren, um so die thermischen Isoliereigenschaften zu verbessern. Da es sich bei dem genannten Porenvolumen meist überwiegend bis ausschließlich um offene Poren handelt, ist es dazu notwendig, den Formkörper in einer gasdiffusionsdichten Umhüllung zu konfektionieren und anschließend zumindest teilweise zu evakuieren sowie abschließend die Umhüllung zu schließen.

In Abhängigkeit von der (ursprünglichen) Dichte des Formkörpers und/oder in Abhängigkeit vom Grad der Evakuierung lassen sich im Ergebnis Formkörper herstellen, die:
a) entweder im wesentlichen das gleiche Volumen besitzen wie der ursprüngliche (nicht evakuierte) Formkörper, wobei jedoch zumindest ein Teil der Luft entfernt und damit eine zumindest teilweise Evakuierung eingestellt ist, oder
b) das Volumen des zumindest teilweise evakuierten Formkörpers kleiner ist als das Volumen des ursprünglichen Formkörpers (aufgrund der Evakuierungsbehandlung).

Im Fall a) ergibt sich bei im wesentlichen unveränderter Form (Außenmaßen) des Formkörpers vor und nach der erfindungsgemäßen Konfektionierung eine verbesserte thermische Isolierung nach der Evakuierung. Im Fall b) läßt sich eine nochmals gesteigerte thermische Isolierwirkung einstellen.

In ihrer allgemeinsten Ausführungsform betrifft die Erfindung danach einen Formkörper mit mindestens einer verformbaren, porösen Schicht und einer gasdiffusionsdichten Umhüllung, wobei das in dieser Schicht (beispielsweise zwischen Fasern einer Faserschicht) vorhandene Porenvolumen zumindest teilweise evakuiert ist.

Wie ausgeführt kann die Schicht eine Faserschicht sein und beispielsweise aus Mineralfasern bestehen, wobei der Begriff "Mineralfasern" insbesondere Steinwollefasern, Glaswollefasern, Schlackenfasern beziehungsweise keramische Fasern umfaßt. Die Fasern selbst können mehr oder weniger dicht, aber auch porös, zum Beispiel hohl oder geschäumt, sein. Auch die bei der Faserherstellung anfallenden sogenannten Perlen können (dicht, hohl oder porös) eingesetzt werden.

Ebenso kann die Faserschicht aber auch aus tierischen oder pflanzlichen Fasern, einschließlich Holzfasern bestehen.

Für die gasdiffusionsdichte Umhüllung bietet sich die Verwendung einer Folie, beispielsweise einer Kunststoffoder Metallfolie an.

Das in der Schicht, beispielsweise zwischen den Fasern der Faserschicht vorhandene Porenvolumen wird nach einer Ausführungsform zu mindestens 50 % evakuiert, nach einer weiteren Ausführungsform zu mindestens 70 %. Optimierte thermische Isoliereigenschaften ergeben sich bei vollständiger Evakuierung des ursprünglich mit Luft gefüllten Hohlraumes.

Insbesondere dann, wenn ein Formteil erfindungsgemäß konfektioniert wird, welches eine relativ geringe Rohdichte besitzt, beispielsweise 20 bis 80 kg/m³ führt die Evakuierungsbehandlung zwangsläufig zu einer Verringerung der Schichtdicke (Materialdicke). Damit wird es ermöglicht, beispielsweise hervorragende Wärmedämmeigenschaften bei geringer Dämmstoffdicke zu erzielen. Auf diese Weise kann beispielsweise der verfügbare Netto-Nutzraum in Gebäuden vergrößert werden.

Bei Produkten mit einer höheren Rohdichte (beispielsweise über 150 kg/m³) kommt es trotz der Evakuierungsbehandlung üblicherweise zu keiner nennenswerten Komprimierung des Formkörpers; in jedem Fall werden aber die thermischen Isoliereigenschaften aufgrund der geringeren Wärmeleitfähigkeit von Vakuum nachhaltig verbessert.

Der Formkörper kann einschichtig sein, aber auch mehrschichtig. Dabei kann die mindestens eine weitere Schicht (gegebenenfalls ebenfalls) aus Fasern bestehen. Die mindestens eine weitere Schicht kann aus einem zur ersten Schicht unterschiedlichen Werkstoff gebildet werden. So kann die weitere Schicht beispielsweise aus einem oder mehreren der folgenden Werkstoffe bestehen: einem anorganischen Material, Kunststoff, Metall, Glas, Holz oder Keramik. Das anorganische Material kann beispielsweise ein Putz sein, beispielsweise ein Gips- oder Zementputz. Ebenso kann die weitere Schicht eine vorkonfektionierte Platte sein, beispielsweise auf Basis Gips, Zement, Kunststoff oder Metall. Ebenso kann die weitere Schicht von einem Rohrkörper gebildet werden, von einem Gitter, einem wabenförmigen Gerüst, Karton, von

Fliesen, Vliesen und/oder Folien. Auf diese Weise lassen sich für unterschiedlichste Anwendungen individuell Produkte herstellen, die mindestens eine Schicht aufweisen, die mindestens teilweise evakuiert ist. Soweit die mindestens eine weitere Schicht selbst gasdiffusionsdicht ist, ist es nicht notwendig, den gesamten Formkörper mit einer gasdiffusionsdichten Umhüllung auszubilden, wenngleich dies herstellungstechnisch in der Regel bevorzugt sein wird. Vielmehr würde es in solchen Fällen genügen, die gasdiffusionsdichte Umhüllung an die bereits gasdiffusionsdichte Schicht gasdiffusionsdicht anzuschließen, so daß sie die mindestens eine poröse Schicht umhüllt.

Je nach Geometrie und Art des Formkörpers kann es zweckmäßig sein, die Umhüllung aus zwei Folienlagen zu bilden, wobei jede Folie größer ist als die korrespondierenden Hauptflächen des Formkörpers, so daß ein dazwischen konfektionierter, noch nicht evakuierter Formkörper allseitig von den Folien überragt wird. Im Bereich der über- stehenden Bereiche der Folien können diese dann miteinander bis auf eine Evakuierungsöffnung verschweißt werden. Anschließend findet über die offene Stelle eine Evakuierung statt. Die offene Stelle wird anschließend unter Aufrechterhaltung des (Teil)Vakuums geschlossen, beispielsweise verschweißt.

Die Umhüllung kann beispielsweise auch aus einer Art "Tüte" bestehen, in die die mindestens eine poröse Schicht, beispielsweise eine Nineralfaserschicht, hineingegeben wird, so daß die Umhüllung anschließend nur noch an einer Seite geschlossen werden muß, beispielsweise wie vorstehend beschrieben.

Die mindestens eine poröse Schicht kann aus Zonen unterschiedlicher Formgestaltung bestehen. Ein Beispiel hierfür ist eine Faser-Lamellenmatte, die Lamellen unterschiedlicher Dicke enthält. Dabei können die Lamellen auf einer Hauptfläche miteinander fluchten, während auf der anderen Hauptfläche einzelne Lamellen über benachbarte Lamellen vorstehen. Es ist ohne weiteres ersichtlich, daß die Umhüllung sich bei der Evakuierung entsprechend der Formgebung an die Oberflächen des Formkörpers anpassen wird, so daß im Ergebnis auch nach der Umhüllung der Schicht(en) und Evakuierung ein Formkörper mit Zonen unterschiedlicher Formgestaltung erhalten bleibt.

Ebenso ist es möglich, die mindestens eine poröse Schicht aus Zonen unterschiedlicher Dichte auszubilden. Auch dies soll anhand einer Faser-Lamellenplatte beispielhaft erläutert werden. Es ist denkbar, benachbarte Lamellen abwechselnd mit hoher Dichte (beispielsweise 100 kg/m³) und geringer Dichte (beispielsweise 30 kg/m³) auszubilden. Eine daraus gebildete Platte weist entsprechend Lamellen höherer Festigkeit und dazwischenliegenden Lamellen geringerer Festigkeit auf. Nachdem die Faserschicht mit einer Umhüllung umgeben wurde, führt die anschließende Evakuierungsbehandlung dazu, daß die Zonen geringerer Dichte stärker komprimiert werden als die Zonen höherer Dichte, so daß im Ergebnis wiederum ein Formkörper mit Zonen unterschiedlicher Formgestaltung entsteht, und zwar auch dann, wenn die Lamellen unterschiedlicher Dichte ursprünglich eine gleiche Materialstärke aufwiesen.

Beispielsweise zur Verwendung als Fassadendämmplatte bietet es sich an, den Formkörper in Plattenform zu konfektionieren, bei dem mindestens eine Schicht eine ebene Hauptfläche aufweist. Diese kann die Sichtfläche sein, aber auch die einer Montagewand zugewandte Seite, je nachdem, ob eine strukturierte oder glatte Sichtfläche gewünscht wird.

Entsprechend kann mindestens eine Schicht eine profilierte Oberfläche aufweisen, um beispielsweise bei Fassaden-Dämmelementen strukturierte (profilierte) Oberflächen zur ästhetischen Gestaltung einer Fassade auszubilden. Diese Oberflächen können anschließend beispielsweise durch weitere Formteile abgedeckt werden.

Die einzelnen Schichten können eine gleiche oder unterschiedliche Form aufweisen. Nach einer Ausführungsform ist die mindestens eine weitere Schicht im Kontaktbereich zur ersten Schicht der Gestaltung der korrespondierenden Oberfläche der ersten Schicht im wesentlichen angepaßt. Weist die erste Schicht zum Beispiel oberflächlich, im Schnitt, eine Wellenkontur auf, so kann die zweite Schicht entsprechend konfektioniert sein, also ebenfalls wellenartig verlaufen.

Die unterschiedlichen Schichten können, aber müssen nicht partiell miteinander verbunden sein. In der Regel genügt es, die Schichten aufeinanderzulegen, da sie ohnehin über die Umhüllung und anschließende Evakuierung gegeneinander sicher konfektioniert werden.

Insbesondere bei der Vorkonfektionierung des Formkörpers in Plattenform oder als Rohrhalbschale kann es zweckmäßig sein, mindestens einen Randbereich falzartig auszubilden, um benachbarte Formkörper fugenfrei gegeneinander zu setzen. Üblicherweise sind dazu mindestens zwei benachbarte Randbereiche falzartig gestaltet.

Formkörper der beschriebenen Art können für unterschiedlichste Anwendungen genutzt werden. Nachstehende Aufstellung ist beispielhaft und nicht beschränkend:
- generell im Bauwesen
- zur Isolierung von Kühlschränken
- (in leicht gewölbter Form) zur Isolierung von Autodächern oder hinter Seitenverkleidungen
- (in Plattenform) zur Containerdämmung
- in unterschiedlichsten geometrischen Formen zur Isolierung/Wärmedämmung von Wohnwagen und Wohnwagenteilen
- in Bogenform oder Torform zur Isolierung von Flugzeugkabinen
- in beliebigen Formen zur Dämmung von Raumschiffen
- insbesondere in Plattenform zur Dämmung von mobilen Toilettenhäusern oder Sanitärwagen
- zur Wärmedämmung von Eisenbahnabteilen oder Schiffen
- in unterschiedlichsten geometrischen Formen für technische Isolierungen, beispielsweise Kesseln
- in Halbschalenform zur Rohrisolierung
- zur Fassadendämmung.

Dabei erfüllen die vorgenannten Formkörper nicht nur eine thermische Isolierfunktion, sondern auch größtenteils die Funktion einer Schalldämmung.

In allen Fällen können die Formkörper dabei ein- oder mehrschichtig ausgebildet sein, in letztgenanntem Fall also in Form sogenannter Sandwichelemente. Diese können zum Beispiel mit Deckschichten aus steifen Materialien wie Holz, Metall, Kunststoff oder dergleichen gebildet werden.

Weitere Merkmale der Erfindung ergeben sich aus den Merkmalen der Unteransprüche sowie den sonstigen Anmeldungsunterlagen.

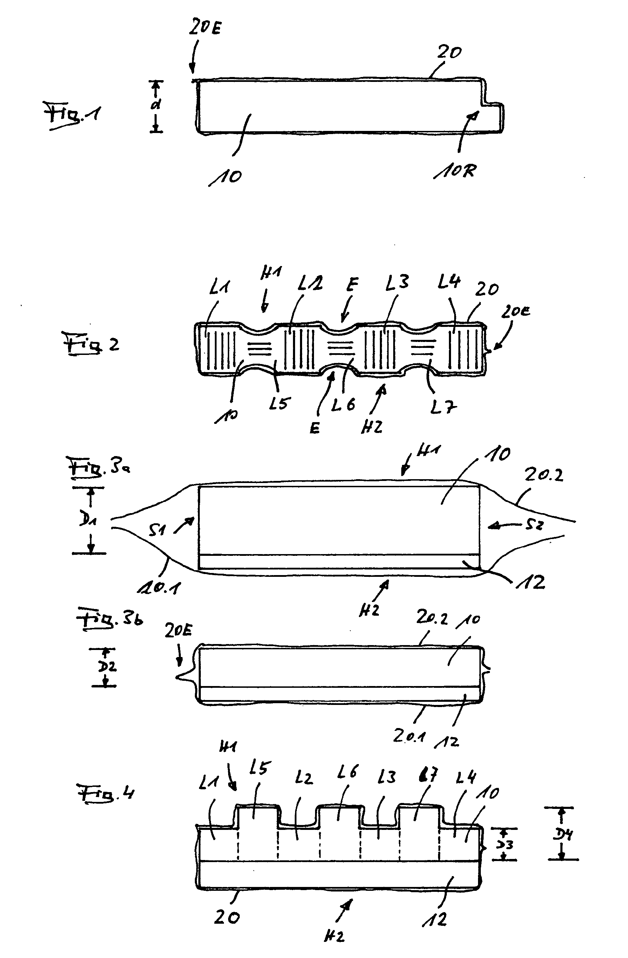

Die Erfindung wird nachstehend anhand verschiedener Ausführungsbeispiele dargestellt. Dabei zeigen - jeweils in stark schematisierter Seitenansicht - die Figuren 1 bis 4 unterschiedliche Ausführungsbeispiele eines erfindungsgemäßen Formkörpers, bei den Figuren, 1, 2 und 4 jeweils im fertig konfektionierten Zustand, beim Ausführungsbeispiel nach Figur 3a im Zustand vor der Evakuierung und in Figur 3b nach der Evakuierung. In den Figuren sind gleiche oder gleichwirkende Bauteile mit gleichen Bezugsziffern bezeichnet.

Beim Ausführungsbeispiel nach Figur 1 handelt es sich um eine Dämmplatte aus einer Mineralfaserschicht 10 mit zwei falzartig gestalteten Randabschnitten 10R. Eine Umhüllung 20 aus einer Polyäthylenfolie deckt alle Oberflächen der Schicht 10 ab. Die Schicht 10 ist vollständig evakuiert. Zur Konfektionierung der Dämmplatte wurde die Schicht 10, die ursprünglich eine größere Dicke als d besaß, in die ursprünglich beutelartige Umhüllung 20 eingelegt, die anschließend an ihrem offenen Ende 20E bis auf eine Evakuierungsöffnung geschlossen wurde. Danach wurde über die verbliebene Öffnung in der Umhüllung ein Unterdruck erzeugt, so daß Luft zwischen den Fasern der Schicht 10 abgesaugt wurde, unter gleichzeitiger Komprimierung der Schicht 10 auf die Dicke d. Zum Abschluß wurde die verbliebene Öffnung am Ende 20E verschweißt. Die Umhüllung 20 ist gasdiffusionsdicht, so daß das Vakuum in der Schicht 10 dauerhaft ist.

Gegenüber der ursprünglichen Schicht 10 (mit Luft zwischen den Fasern im offenen Porenvolumen) weist die Dämmplatte eine deutlich verbesserte Wärmedämmung auf. Gleichzeitig stellt die Umhüllung 20 eine Dampfdiffusionssperre zur Verfügung.

Das Ausführungsbeispiel nach Figur 2 entspricht im wesentlichen dem nach Figur 1. Es handelt sich ebenfalls um eine Mineralfaserschicht 10, die in einer Kunststoffumhüllung 20 konfektioniert ist. Die Mineralfaserschicht 10 besteht aus sieben Lamellen, die untereinander verklebt sind. Bei den Lamellen L1, L2, L3 und L4 ist die Faserorientierung im wesentlichen vertikal, also senkrecht zu den beiden Hauptflächen H1, H2 der Dämmplatte. Jeweils zwischen den Lamellen L1, L2; L2, L3 und L3, L4 sind Lamellen L5, L6 und L7 angeordnet, bei denen die Faserorientierung im wesentlichen horizontal ist, also parallel zu den Hauptflächen H1, H2.

Bei der Evakuierung hat dies zur Folge, daß die Lamellen L5, L6 und L7 stärker komprimiert werden als die Lamellen L1, L2, L3 und L4, woraus die in Figur 2 dargestellte Oberflächengeometrie des fertig konfektionierten, evakuierten Dämmelementes resultiert. Schematisch ist dies in Figur 2 durch Einwölbungen E in Teilzonen der Hauptflächen H1, H2 dargestellt. Bei 20E ist wiederum der Verschlußbereich der Umhüllung 20 zu erkennen.

Figur 3a zeigt einen zweischichtigen Formkörper. Parallel zu einer Mineralfaserschicht 10 verläuft eine Holzplatte 12. Mineralfaserschicht 10 und Holzschicht 12 sind auf einer Folie 20.1 aufgelegt und von einer weiteren Folie 20.2 abgedeckt, die jeweils deutlich größer sind als die Hauptflächen H1 und H2 des Gesamtelementes zuzüglich der Seitenflächen S1 und S2 des gesamten Formkörpers. Die Mineralfaserschicht 10 weist eine Rohdichte von 30 kg/m³ auf.

Zur Konfektionierung werden die Randbereiche der Folien 20.1, 20.2 umgeschlagen (gegeneinander geführt) und endseitig mit Ausnahme einer Evakuierungsöffnung umlaufend verschweißt. Danach wird ein Vakuum angelegt. Während der Evakuierung "schrumpft" die Dämmschicht 10 (aufgrund der Luftentweichung), während die Holzschicht 12 formstabil bleibt. Gleichzeitig legen sich die Folien 20.1, 20.2 an die Oberflächen H1, H2, S1, S2 des Formkörpers an. Bei diesem Beispiel wird die Evakuierung nur bis zu einem 70 %-igen Vakuum im offenen Porenvolumen der Faserschicht 10 geführt und anschließend die Evakuierungsöffnung am Ende 20E der Umhüllung 20, bestehend aus den Folien 20.1, 20.2 geschlossen.

Aus einer Zusammenschau der Figuren 3a, 3b ergibt sich, daß die Dicke D1 der noch nicht evakuierten Mineralfaserschicht 10 (Figur 3a) nach der Evakuierung (Figur 3b), dort mit D2 dargestellt, um etwa die Hälfte abgenommen hat.

Figur 4 zeigt wiederum einen Formkörper in Sandwichbauweise, der eine Mineralfaserschicht 10 und eine Holzwolleschicht 12 besitzt. Die Holzwolleschicht 12 ist eine bekannte Holzwolleleichtbauplatte. Die Mineralfaserschicht 10 besteht, ähnlich wie beim Ausführungsbeispiel nach Figur 2, aus Lamellen L1, L2, L3 und L4 einer Dicke D3. Zwischen den Lamellen L1, L2; L2, L3 und L3, L4 sind Lamellen L5, L6 und L7 angeordnet, deren Dicke mit D4 angegeben ist, wobei D4 etwa dem 1,5-fachen von D3 entspricht. Hinsichtlich ihrer Dichte und Faserstruktur sind alle Lamellen gleich.

Die angegebenen Materialdicken der Lamellen L1 bis L7 beziehen sich auf deren Dicke nach der Evakuierungsbehandlung, also auf den in Figur 4 dargestellten Zustand, bei dem der gesamte Formkörper von einer Aluminiumfolie 20 allseitig umschlossen ist, die analog wie zuvor beschrieben aufgebracht und zum Schluß im Bereich der Evakuierungsöffnung verklebt wurde.

Aufgrund der unterschiedlichen Lamellenhöhen weist der Formkörper nach Figur 4 eine plane Hauptfläche H2 und eine im Profil "mäanderförmige" obere Hauptfläche H1 auf.

## Patentansprüche

1. Formkörper mit mindestens einer verformbaren, porösen Schicht (10) und einer gasdiffusionsdichten Umhüllung (20), wobei ein in dieser Schicht (10) vorhandenes Porenvolumen zumindest teilweise evakuiert ist.

2. Formkörper nach Anspruch 1, bei dem die Schicht (10) eine Faserschicht ist.

3. Formkörper nach Anspruch 2, bei dem die Faserschicht (10) aus Mineralfasern besteht.

4. Formkörper nach Anspruch 2, bei dem die Faserschicht aus Holzfasern besteht.

5. Formkörper nach Anspruch 1, bei dem die Umhüllung (20) aus einer Folie besteht.

6. Formkörper nach Anspruch 5, bei dem die Umhüllung (20) aus einer Metallfolie besteht.

7. Formkörper nach Anspruch 5, bei dem die Umhüllung (20) aus einer Kunststofffolie besteht.

8. Formkörper nach Anspruch 1, bei dem das in der Schicht (10) vorhandene Porenvolumen zu mindestens 50 % evakuiert ist.

9. Formkörper nach Anspruch 1, bei dem das in der Schicht (10) vorhandene Porenvolumen zu mindestens 70 % evakuiert ist.

10. Formkörper nach Anspruch 1, bei dem das in der Schicht (10) vorhandene Porenvolumen vollständig evakuiert ist.

11. Formkörper nach Anspruch 1, mit mindestens einer weiteren Schicht (12) aus einem unterschiedlichen Werkstoff.

12. Formkörper nach Anspruch 11, bei dem die mindestens eine weitere Schicht (12) aus einem Werkstoff der Gruppe besteht, die anorganische Materialien, Kunststoffe, Metalle, Glas, Holz und Keramik umfaßt.

13. Formkörper nach Anspruch 11, bei dem die mindestens eine weitere Schicht (12) aus der Gruppe besteht, die Putze, Platten, Rohre, Gitter, Fliesen, Vliese und Folien umfaßt.

14. Formkörper nach Anspruch 1, bei dem die Umhüllung (20) zumindest an einer Stelle verschweißt ist.

15. Formköprer nach Anspruch 1, bei dem die Umhüllung (20) zumindest an einer Stelle verklebt ist.

16. Formkörper nach Anspruch 1, bei dem die mindestens eine Schicht (10) aus Zonen (L1, L2, L3, L4, L5, L6 und L7) unterschiedlicher Formgestaltung besteht.

17. Formkörper nach Anspruch 1, bei dem die mindestens eine Schicht (10) aus Zonen (L1, L2, L3, L4, L5, L6 und L7) unterschiedlicher Dicke besteht.

18. Formkörper nach Anspruch 1, bei dem die mindestens eine Schicht (10) aus Zonen (L1, L2, L3, L4, L5,L 6 und L 7) unterschiedlicher Dichte besteht.

19. Formkörper nach Anspruch 1 in Plattenform, bei dem mindestens eine Schicht (10, 12) eine ebene Hauptfläche H1, H2 aufweist.

20. Formkörper nach Anspruch 1, bei dem mindestens eine Schicht (10, 12) eine profilierte Oberfläche H1, H2 aufweist.

21. Formkörper nach Anspruch 9, bei dem die mindestens eine weitere Schicht (12) im Kontaktbereich zur ersten Schicht (10) der Gestaltung der korrespondierenden Oberfläche der ersten Schicht (10) im wesentlichen folgt.

22. Formkörper nach Anspruch 11, bei dem die Schichten (10, 12) zumindest partiell miteinander verbunden sind.

23. Formkörper nach Anspruch 1 in Plattenform mit mindestens einem falzartig gestalteten Rand (10R).
